# EUROPEAN PATENT SPECIFICATION

(11) **EP 4 329 177 B1**
(45) Date of publication and mention of the grant of the patent: **07.10.2026**
(21) Application number: 23193592.5
(22) Date of filing: 25.08.2023
(51) Int. Cl.: H02M 1/42, H02M 1/08

(54) **POWER MODULE, TOTEM-POLE POWER FACTOR CORRECTION CIRCUIT, AND CONTROL CIRCUIT THEREOF**
LEISTUNGSMODUL, TOTEMPOL-LEISTUNGSFAKTORKORREKTURSCHALTUNG UND STEUERSCHALTUNG DAFÜR
MODULE DE PUISSANCE, CIRCUIT DE CORRECTION DE FACTEUR DE PUISSANCE TOTEM POLAIRE ET CIRCUIT DE COMMANDE ASSOCIÉ

(30) Priority: 26.08.2022 CN 202211032188
(43) Date of publication of application: 28.02.2024
(73) Proprietor: Huawei Digital Power Technologies Co., Ltd., Shenzhen, Guangdong 518043 (CN)
(72) Inventor: CHIN, Ken, 518043 Shenzhen (CN); WANG, Shuaibing, 518043 Shenzhen (CN); WANG, Bo, 518043 Shenzhen (CN)
(74) Representative: Gill Jennings & Every LLP

(56) References cited:
- WO-A1-2022/017330
- US-A1- 2015 280 548
- US-A1- 2019 326 810
- LI BINXING ET AL: "GaN HEMT Driving Scheme of Totem-Pole Bridgeless PFC Converter", 2018 IEEE INTERNATIONAL POWER ELECTRONICS AND APPLICATION CONFERENCE AND EXPOSITION (PEAC), IEEE, 4 November 2018 (2018-11-04), pages 1 - 6, XP033477138, DOI: 10.1109/PEAC.2018.8590677

## Description

### TECHNICAL FIELD

This application relates to the field of power supply technologies, and in particular, to a power module, a totem-pole power factor correction circuit, and a control circuit thereof.

### BACKGROUND

A power module includes a totem-pole power factor correction circuit, a direct current conversion circuit, and a control circuit. The totem-pole power factor correction circuit is configured to receive an alternating current, and provide an input voltage for the direct current conversion circuit. The totem-pole power factor correction circuit includes at least one switching transistor and at least one inductor. The control circuit is configured to control turn-on and turn-off of the at least one switching transistor, to alternately charge and discharge the inductor. When alternately charged and discharged, the inductor may be configured to rectify the alternating current, and provide the input voltage for the direct current conversion circuit. When the control circuit adjusts charging time and discharging time of the inductor to change, a power factor provided by the power factor correction circuit can be adjusted, to improve power consumption efficiency of the power module. When a peak voltage value of the input voltage of the totem-pole power factor correction circuit is small, energy stored after the inductor is charged is low, and a voltage provided by the inductor for the switching transistor is low. In this case, if the control circuit controls the switching transistor to be turned on, hard turn-on of the switching transistor in a case of different voltages at both sides may be caused, which increases a switching loss of the power factor correction circuit. US 2015/0280548 A1 discloses a bridgeless power factor improvement converter. US 2019/0326810 A1 discloses a power-factor correcting converter. Li et al.: "GaN HEMT Driving Scheme of Totem-Pole Bridgeless PFC Converter", discloses the influence of the impedance of the driving circuit and Miller capacitance on the drive circuit. WO 2022/017330 A1 discloses a totem-pole PFC circuit and control method therefor, circuit board and storage medium.

Therefore, how to avoid hard turn-on of the switching transistor in the totem-pole power factor correction circuit is a technical problem that needs to be resolved in this field.

### SUMMARY

This application provides a power module, a totem-pole power factor correction circuit, and a control circuit thereof. The invention is defined by the appended independent claims. Advantageous examples are defined in the dependent claims.

### BRIEF DESCRIPTION OF DRAWINGS

To describe the technical solutions in embodiments of this application or the conventional technology more clearly, the following briefly describes the accompanying drawings required for describing embodiments or the conventional technology. It is clear that the accompanying drawings in the following description show merely some embodiments of this application, and a person of ordinary skill in the art may still derive other drawings from these accompanying drawings without creative efforts.
FIG. 1 is a schematic diagram of a structure of an electronic device according to an embodiment of this application;
FIG. 2 is a schematic diagram of a structure of an electronic device according to an embodiment of this application;
FIG. 3 is a schematic diagram of a structure of a power module according to an embodiment of this application;
FIG. 4 is a schematic diagram of a structure of a power module according to this application;
FIG. 5 is a schematic diagram of a control logic of a control circuit of a totem-pole power factor correction circuit;
FIG. 6 is a schematic diagram of a control logic of a control circuit of a totem-pole power factor correction circuit according to this application;
FIG. 7 is a schematic diagram of another circuit structure of a totem-pole power factor correction circuit according to this application;
FIG. 8 is a schematic diagram of a structure of a power module according to this application; and
FIG. 9 is a schematic diagram of a control logic of a control circuit of a totem-pole power factor correction circuit according to an illustrative and unclaimed implementation.

### DESCRIPTION OF EMBODIMENTS

The following clearly describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In the specification, claims, and accompanying drawings of this application, the terms "first", "second", "third", "fourth", and the like (if existing) are intended to distinguish between similar objects but do not necessarily indicate a specific order or sequence. It should be understood that data termed in such a way are interchangeable in proper circumstances, so that embodiments of this application described herein can be implemented in orders except the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The connection relationship described in this application is a direct or indirect connection. For example, that A is connected to B may not only be that A is directly connected to B, but also be that A is indirectly connected to B by using one or more other electrical components. For example, it may be that A is directly connected to C, and C is directly connected to B. In this way, A is connected to B by using C. It may be further understood that "A is connected to B" described in this application may be that A is directly connected to B, or may be that A is indirectly connected to B by using one or more other electrical components.

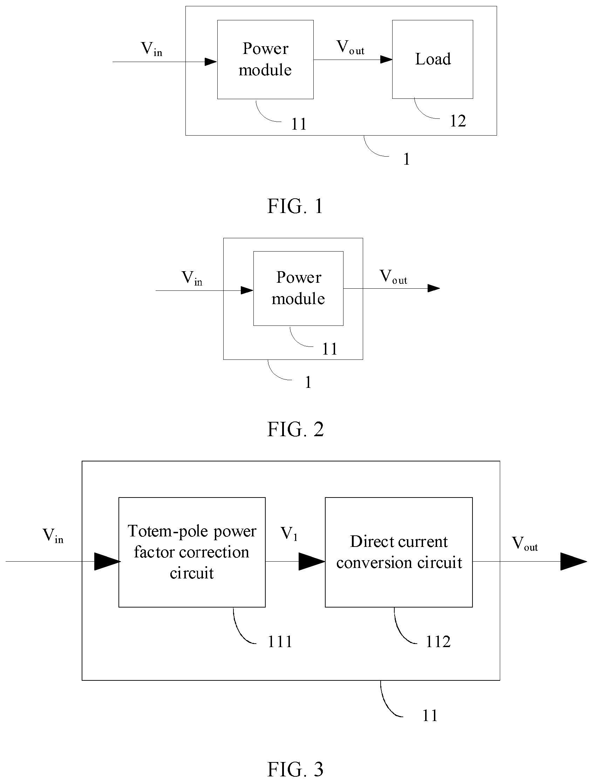

FIG. 1 is a schematic diagram of a structure of an electronic device according to an embodiment of this application. As shown in FIG. 1, the electronic device 1 includes a power module 11 and a load 12. The power module 11 is configured to receive an input voltage Vᵢₙ, and provide an output voltage Vₒᵤₜ to supply power to the load 12. In an embodiment, the input voltage Vᵢₙ may be provided by an external power supply, or may be provided by an internal power supply of the electronic device 1.

The electronic device 1 provided in the embodiment shown in FIG. 1 may be an electric device such as a mobile phone, a notebook computer, a computer chassis, a television, a smart tablet, an interactive tablet, an electric vehicle, a smart furniture device, a smartwatch, or a wearable device. The power module 11 provided in this embodiment of this application may be used in the electronic device 1 shown in FIG. 1.

FIG. 2 is a schematic diagram of a structure of an electronic device according to an embodiment of this application. As shown in FIG. 2, the electronic device 1 includes a power module 11. The power module 11 is configured to receive an input voltage Vᵢₙ, and provide an output voltage Vₒᵤₜ to supply power to a load subsequently connected to the electronic device 1. In an embodiment, the input voltage Vᵢₙ may be provided by an external power supply, or may be provided by an internal power supply of the electronic device 1.

The electronic device 1 provided in the embodiment shown in FIG. 2 may be a power supply device such as a power adapter, a charger, a car charging station, or a mobile power supply. The power module provided in this embodiment of this application may be used in the electronic device 1 shown in FIG. 2.

In an embodiment of this application, the electronic device 1 may include a plurality of power modules 11, and the plurality of power modules 11 provide the output voltage Vₒᵤₜ to supply power to the load 12. In an embodiment of this application, the electronic device 1 may include a plurality of loads 12, and the power module 11 provides a plurality of output voltages Vₒᵤₜ to supply power to the plurality of loads 12. In an embodiment of this application, the electronic device 1 may include a plurality of power modules 11 and a plurality of loads 12, and the plurality of power modules 11 provide a plurality of output voltages Vₒᵤₜ to supply power to the plurality of loads 12.

In an embodiment of this application, the input voltage Vᵢₙ may be an alternating current, and the power module 11 may include an alternating current-direct current conversion circuit. In this embodiment of this application, the input voltage Vᵢₙ may be a direct current, the internal power supply may include an energy storage apparatus, and the power module 11 may include a direct current conversion circuit. Correspondingly, when the electronic device 1 operates independently, the energy storage apparatus of the internal power supply may supply power to the power module 11.

In an embodiment of this application, the input voltage Vᵢₙ may be a direct current. The load 12 of the electronic device 1 may include one or more of an electric apparatus, an energy storage apparatus, or an external device. In an embodiment, the load 12 may be an electric apparatus of the electronic device 1, for example, a processor or a display. In an embodiment, the load 12 may be an energy storage apparatus of the electronic device 1, for example, a battery. In an embodiment, the load 12 may be an external device of the electronic device 1, for example, another electronic device such as a display or a keyboard.

FIG. 3 is a schematic diagram of a structure of a power module according to an embodiment of this application. The power module 11 shown in FIG. 3 may be used in the electronic device 1 shown in FIG. 1 or FIG. 2. The power module 11 includes a totem-pole power factor correction (power factor correction, PFC) circuit 111 and a direct current conversion circuit 112. The power module 11 is configured to receive an input voltage Vᵢₙ, perform power factor correction processing, and then provide an output voltage Vₒᵤₜ. The input voltage Vᵢₙ is an alternating current. The output voltage Vₒᵤₜ is a direct current.

The totem-pole power factor correction circuit 111 is configured to receive the input voltage Vᵢₙ of the power module 11, rectify the input voltage Vᵢₙ of the power module 11, perform power factor correction processing, and then provide an output voltage V₁ for the direct current conversion circuit 112. The output voltage V₁ of the totem-pole power factor correction circuit 111 is a direct current. Circuit parameters such as phases of the output voltage V₁ of the totem-pole power factor correction circuit 111 and the input voltage Vᵢₙ of the totem-pole power factor correction circuit 111 are different. In an embodiment, a voltage value of the input voltage Vᵢₙ of the totem-pole power factor correction circuit 111 may be equal to that of the output voltage V₁ of the totem-pole power factor correction circuit 111. Alternatively, a voltage value of the input voltage Vᵢₙ of the totem-pole power factor correction circuit 111 is greater than that of the output voltage V₁ of the totem-pole power factor correction circuit 111.

The direct current conversion circuit 112 is configured to receive the output voltage V₁ of the totem-pole power factor correction circuit 111, perform voltage conversion on the output voltage V₁, and provide the output voltage Vₒᵤₜ of the power module 11. The direct current conversion circuit 112 may be a circuit with an isolation function. For example, the direct current conversion circuit 112 may be one of an asymmetrical half-bridge (asymmetrical half-bridge, AHB) flyback conversion circuit or an active clamp flyback (active clamp flyback, ACF) conversion circuit. Alternatively, the direct current conversion circuit 112 may be a circuit with a non-isolation function. For example, the direct current conversion circuit 112 may be one of a boost (boost) circuit, a buck (buck) circuit, or a buck/boost (buck-boost) circuit.

The totem-pole power factor correction circuit 111 includes a control circuit, at least one inductor, and at least one switching transistor. The control circuit may be configured to send a control signal to the at least one switching transistor, so that the at least one switching transistor is turned on or off based on the control signal, to control the at least one inductor to be charged or discharged through the turned-on switching transistor. When the at least one inductor is charged, the input voltage Vᵢₙ of the totem-pole power factor correction circuit 111 charges the at least one inductor. When the at least one inductor is discharged, the at least one inductor provides the output voltage V₁ for the direct current conversion circuit 112. The control circuit may adjust a power factor of the output voltage of the totem-pole power factor correction circuit 111 by adjusting charging time and/or discharging time of the at least one inductor.

In an embodiment, the control circuit of the totem-pole power factor correction circuit 111 may include a pulse width modulation (Pulse width modulation, PWM) controller, a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, or the like.

In an embodiment, the switching transistor of the totem-pole power factor correction circuit 111 may be any one of a metal-oxide semiconductor field-effect transistor (Metal-Oxide Semiconductor Field-Effect Transistor, MOSFET), an insulated gate bipolar transistor (Insulated Gate Bipolar Transistor, IGBT), a bipolar power transistor (bipolar power transistor), a wide band-gap semiconductor field-effect transistor, or the like.

In an embodiment, the switching transistor is driven to be turned on at a high level and turned off at a low level. For example, the control circuit sends a high-level control signal to the switching transistor, and the switching transistor is turned on based on the control signal. The control circuit sends a low-level control signal to the switching transistor, and the switching transistor is turned off based on the control signal. Alternatively, the control circuit sends no control signal to the switching transistor, and the switching transistor is turned off when receiving no control signal. It may be understood that in embodiments of this application, the switching transistor may alternatively be driven in another manner. A driving manner of the switching transistor is not limited in embodiments of this application.

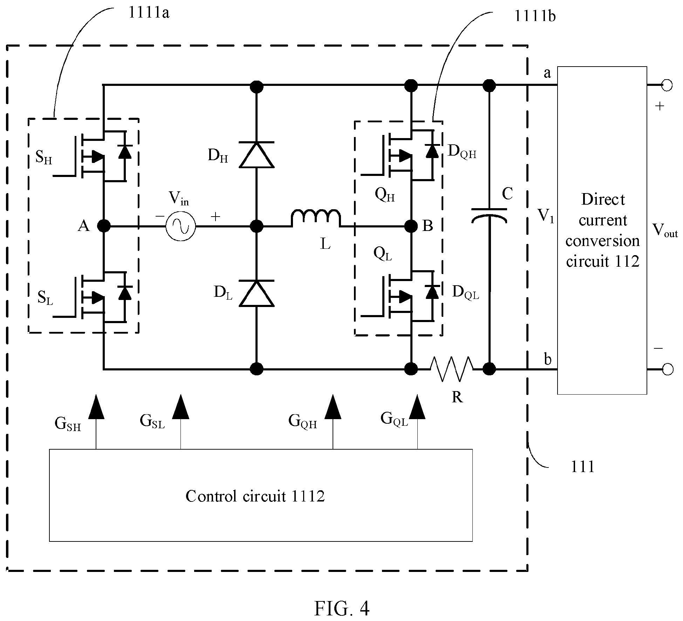

FIG. 4 is a schematic diagram of a structure of a power module according to this application. The power module shown in FIG. 4 includes a totem-pole power factor correction circuit 111 and a direct current conversion circuit 112. The totem-pole power factor correction circuit 111 is configured to receive an input voltage Vᵢₙ, perform rectification and power factor correction processing, and then provide an output voltage V₁ for the direct current conversion circuit 112.

An example in which the totem-pole power factor correction circuit 111 provided in FIG. 4 is a bridgeless totem-pole power factor correction circuit is used. The totem-pole power factor correction circuit 111 includes an inductor L, a first switch S_{L}, a second switch S_{H}, a third switch Q_{L}, and a fourth switch Q_{H}. The first switch S_{L} and the second switch S_{H} are connected in series to form a half-bridge circuit 1111a. A bridge arm midpoint A of the half-bridge circuit 1111a is connected to a negative electrode of the input voltage Vᵢₙ. The half-bridge circuit 1111a is further connected in parallel between an interface a and an interface b of an output end of the totem-pole power factor correction circuit 111. The third switch Q_{L} and the fourth switch Q_{H} are connected in series to form a half-bridge circuit 1111b. A bridge arm midpoint B of the half-bridge circuit 1111b is connected to one end of the inductor L. The other end of the inductor L is connected to a positive electrode of the input voltage Vᵢₙ. The half-bridge circuit 1111b is further connected in parallel between the interface a and the interface b of the output end of the totem-pole power factor correction circuit 111.

The control circuit 1112 is configured to send a first control signal G_{SL} to the first switch S_{L}, and the first switch S_{L} is turned on based on the first control signal G_{SL}. The control circuit 1112 is configured to send a second control signal G_{SH} to the second switch S_{H}, and the second switch S_{H} is turned on based on the second control signal G_{SH}. The control circuit 1112 is configured to send a third control signal G_{QL} to the third switch Q_{L}, and the third switch Q_{L} is turned on based on the third control signal G_{QL}. The control circuit 1112 is configured to send a fourth control signal G_{QH} to the fourth switch Q_{H}, and the fourth switch Q_{H} is turned on based on the fourth control signal G_{QH}.

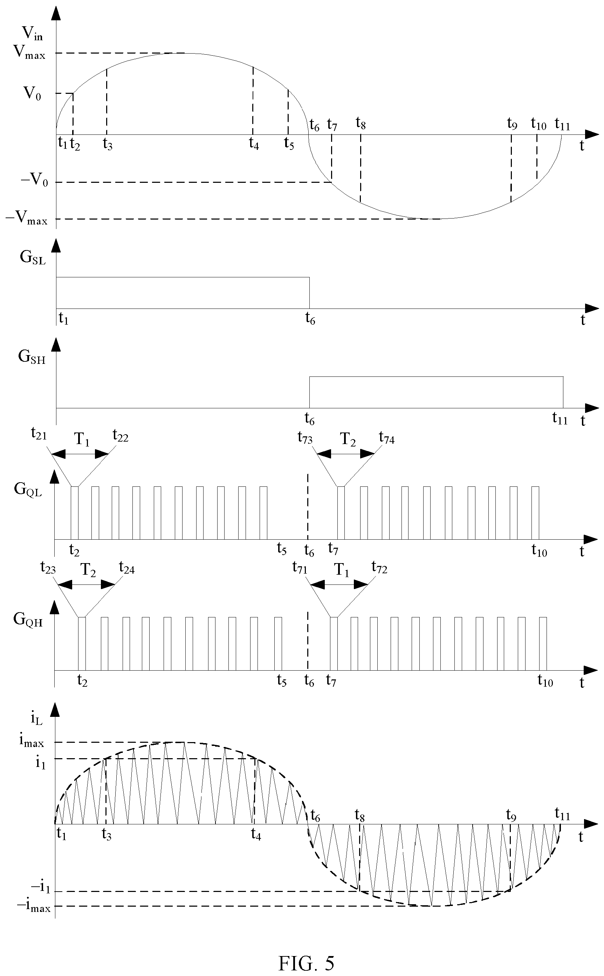

FIG. 5 is a schematic diagram of a control logic of a control circuit of a totem-pole power factor correction circuit. The following describes the control logic in FIG. 5 with reference to the totem-pole power factor correction circuit 111 provided in FIG. 4.

At a moment t₁, a voltage value of the input voltage Vᵢₙ received by the totem-pole power factor correction circuit 111 increases from 0. The control circuit 1112 sends the first control signal G_{SL} to the first switch S_{L}, so that the first switch S_{L} is turned on based on the first control signal G_{SL}. In addition, the second switch S_{H} is turned off. After the moment t₁ and before a moment t₆, the voltage value of the input voltage Vᵢₙ remains positive, and the control circuit 1112 continuously sends the first control signal G_{SL} to the first switch S_{L}, so that the first switch S_{L} remains on, and the second switch S_{H} remains off.

Before a moment t₂, because the voltage value of the input voltage Vᵢₙ is small, some control circuits 1112 provide a low voltage protection function for the totem-pole power factor correction circuit 111. When the voltage value of the input voltage Vᵢₙ received by the totem-pole power factor correction circuit 111 is less than Vₒ, the control circuit 1112 does not send the third control signal G_{QL} to the third switch Q_{L}, and does not send the fourth control signal G_{QH} to the fourth switch Q_{H}, and the third switch Q_{L} and the fourth switch Q_{H} are turned off.

After the moment t₂, the voltage value of the input voltage Vᵢₙ received by the totem-pole power factor correction circuit 111 is greater than V₀, and the control circuit 1112 controls the third switch Q_{L} and the fourth switch Q_{H} to be alternately turned on, so that the inductor L is alternately charged through the third switch Q_{L} and discharged through the fourth switch Q_{H}. Between the moment t₁ and the moment t₆(including the moment t1 and the moment t6), the third switch Q_{L} configured to charge the inductor L is denoted as a main power switch, and the fourth switch Q_{H} configured to discharge the inductorr L is denoted as an auxiliary power switch.

For example, at a moment t₂₁ after the moment t₂, the control circuit 1112 sends the third control signal G_{QL} to the third switch Q_{L}, so that the third switch Q_{L} is turned on based on the third control signal G_{QL}. In addition, the fourth switch Q_{H} is turned off. In this case, the input voltage Vᵢₙ charges the inductor L through the third switch Q_{L} and the first switch S_{L}, and a current i_{L} flowing through the inductor L gradually increases.

After the control circuit 1112 sends the third control signal G_{QL} to the third switch Q_{L} for first preset duration T₁, at a moment t₂₂, the control circuit 1112 stops sending the third control signal G_{QL} to the third switch Q_{L}, the third switch Q_{L} is turned off, the fourth switch Q_{H} is turned off, and the input voltage Vᵢₙ stops charging the inductor L.

At a moment t₂₃ after the moment t₂₂, the control circuit 1112 sends the fourth control signal G_{QH} to the fourth switch Q_{H}, so that the fourth switch Q_{H} is turned on based on the fourth control signal G_{QH}, and the third switch Q_{L} is turned off. In this case, the inductor L is discharged through the fourth switch Q_{H}, an output end a and an output end b of the totem-pole power factor correction circuit 111, and the first switch S_{L}, to provide the output voltage V₁ for the direct current conversion circuit 112. For example, the fourth switch Q_{H} is a MOS transistor, and a current discharged by the inductor L flows between a source and a drain of the MOS transistor.

After the control circuit 1112 sends the fourth control signal G_{QH} to the fourth switch Q_{H} for second preset duration T₂, at a moment t₂₄, the control circuit 1112 stops sending the fourth control signal G_{QH} to the fourth switch Q_{H}, the third switch Q_{L} is turned off, the fourth switch Q_{H} is turned off, and the inductor L stops discharging through a source and a drain of the fourth switch Q_{H}.

After a moment t₅, the voltage value of the input voltage Vᵢₙ received by the totem-pole power factor correction circuit 111 is less than V₀, the control circuit 1112 does not send the third control signal G_{QL} to the third switch Q_{L}, and does not send the fourth control signal G_{QH} to the fourth switch Q_{H}, and the third switch Q_{L} and the fourth switch Q_{H} are turned off.

At a moment t₆, the voltage value of the input voltage Vᵢₙ received by the totem-pole power factor correction circuit 111 decreases from 0. The control circuit 1112 sends the second control signal G_{SH} to the second switch S_{H}, so that the second switch S_{H} is turned on based on the second control signal G_{SH}. In addition, the first switch S_{L} is turned off. After the moment t₆ and before a moment t₁₁, the voltage value of the input voltage Vᵢₙ remains negative, and the control circuit 1112 continuously sends the second control signal G_{SH} to the second switch S_{H}, so that the second switch S_{H} remains on, and the first switch S_{L} remains off.

After the moment t₆ and before a moment t₇, the voltage value of the input voltage Vᵢₙ received by the totem-pole power factor correction circuit 111 is less than V₀, the control circuit 1112 does not send the third control signal G_{QL} to the third switch Q_{L}, and does not send the fourth control signal G_{QH} to the fourth switch Q_{H}, and the third switch Q_{L} and the fourth switch Q_{H} are turned off.

After the moment t₇, the voltage value of the input voltage Vᵢₙ received by the totem-pole power factor correction circuit 111 is greater than V₀, and the control circuit 1112 controls the third switch Q_{L} and the fourth switch Q_{H} to be alternately turned on, so that the inductor L is alternately charged through the fourth switch Q_{H} and discharged through the third switch Q_{L}. Between the moment t₆ and the moment t₁₁, the fourth switch Q_{H} configured to charge the inductor L is denoted as the main power switch, and the third switch Q_{L} configured to discharge the inductor L is denoted as the auxiliary power switch.

For example, between a moment t₇₁ and a moment t₇₂ after the moment t₇, the control circuit 1112 sends the fourth control signal G_{QH} to the fourth switch Q_{H}, so that the fourth switch Q_{H} is turned on based on the fourth control signal G_{QH}. In addition, the third switch Q_{L} is turned off. The input voltage Vᵢₙ charges the inductor L through the second switch S_{H} and the fourth switch Q_{H}, and the current i_{L} flowing through the inductor L gradually increases. Between a moment t₇₃ and a moment t₇₄ after the moment t₇₂, the control circuit 1112 sends the third control signal G_{QL} to the third switch Q_{L}, so that the third switch Q_{L} is turned on based on the third control signal G_{QL}. In addition, the fourth switch Q_{H} is turned off. The inductor L provides the output voltage V₁ for the direct current conversion circuit 112 through the third switch Q_{L}, the output end b and the output end a of the totem-pole power factor correction circuit 111 and the second switch S_{H}.

After a moment t₁₀, the voltage value of the input voltage Vᵢₙ received by the totem-pole power factor correction circuit 111 is less than V₀, the control circuit 1112 does not send the third control signal G_{QL} to the third switch Q_{L}, and does not send the fourth control signal G_{QH} to the fourth switch Q_{H}, and the third switch Q_{L} and the fourth switch Q_{H} are turned off.

It may be understood that the input voltage Vᵢₙ received by the totem-pole power factor correction circuit 111 changes periodically. Therefore, in each change cycle, the control circuit 1112 may control the totem-pole power factor correction circuit 111 according to the control logic between the moment t₁ and the moment t₁₁ shown in FIG. 5.

However, if a peak voltage Vₘₐₓ of the input voltage Vᵢₙ received by the totem-pole power factor correction circuit 111 is low, between the moment t₁ and a moment t₃, between a moment t₄ and a moment t₈, and between a moment t₉ and the moment t₁₁, after the control circuit 1112 controls the main power switch to be turned on, a voltage and a current are low when the input voltage Vᵢₙ charges the inductor L. Subsequently, after the control circuit 1112 controls the main power switch to be turned off, energy stored in the inductor L is low. Therefore, before the control circuit 1112 controls the auxiliary power switch to be turned on, the energy stored in the inductor L cannot resonate a voltage value at the midpoint B of the second half-bridge circuit to a large voltage value. The voltage value provided by the midpoint B of the second half-bridge circuit is less than that of the output voltage V₁ provided by a back end of the totem-pole power factor correction circuit 111 for the direct current conversion circuit 112. As a result, when the control circuit 1112 controls the auxiliary power switch to be turned on, voltages at both sides of the auxiliary power switch are different, which causes "hard turn-on" of the auxiliary power switch, further increases a switching loss of the auxiliary power switch, and affects operating efficiency of the totem-pole power factor correction circuit 111 and the power module 11 including the totem-pole power factor correction circuit 111.

In some conventional technologies, a plurality of auxiliary inductors are further disposed in the totem-pole power factor correction circuit 111. The plurality of auxiliary inductors are connected in parallel with the inductor L. In this case, the input voltage Vᵢₙ may charge the inductor L and the plurality of auxiliary inductors at the same time. Even if the voltage value of the input voltage Vᵢₙ is small, the plurality of inductors can simultaneously resonate the voltage value at the midpoint B of the second half-bridge circuit to a large voltage value. Therefore, when the control circuit 1112 controls the auxiliary power switch to be turned on, the voltages at both sides of the auxiliary power switch are the same. However, in the conventional technologies, more inductors need to be disposed in the totem-pole power factor correction circuit 111, which increases complexity of a circuit structure. In addition, the inductor has a large surface area, and occupies large space, which is not conducive to miniaturization design and power density improvement of a power supply and an electronic device.

Embodiments of this application provide a power module, a totem-pole power factor correction circuit, and a control circuit thereof, to resolve a problem of hard turn-on of the auxiliary power switch when the control circuit 1112 of the totem-pole power factor correction circuit 111 in FIG. 4 controls the auxiliary power switch to be turned on. Therefore, the switching loss can be reduced, operating efficiency of the totem-pole power factor correction circuit 111 and the power module 11 including the totem-pole power factor correction circuit 111 can be improved, and technical effects of a simple circuit structure, low costs, and the like are further achieved. Specific embodiments are used below to describe in detail the technical solutions of this application. The following several specific embodiments may be combined with each other, and a same or similar concept or process may not be described repeatedly in some embodiments.

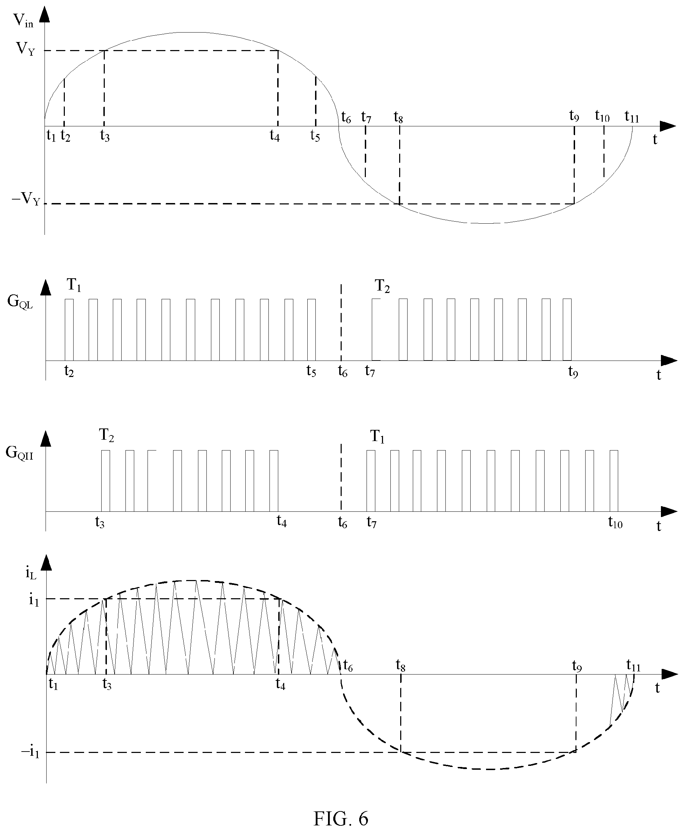

FIG. 6 is a schematic diagram of a control logic of a control circuit of a totem-pole power factor correction circuit according to this application. The control logic shown in FIG. 6 may be applied to the power module 11 shown in FIG. 4, and is used by the control circuit 1112 of the totem-pole power factor correction circuit 111 to control the half-bridge circuit 1111b. The following describes, with reference to the power factor correction circuit provided in FIG. 4, the control logic in FIG. 6 provided in an embodiment of this application.

At a moment t₁, a voltage value of the input voltage Vᵢₙ received by the totem-pole power factor correction circuit 111 increases from 0. The control circuit 1112 sends the first control signal G_{SL} to the first switch S_{L}, so that the first switch S_{L} is turned on based on the first control signal G_{SL}. In addition, the second switch S_{H} is turned off. After the moment t₁ and before a moment t₆, the voltage value of the input voltage Vᵢₙ remains positive, and the control circuit 1112 continuously sends the first control signal G_{SL} to the first switch S_{L}, so that the first switch S_{L} remains on, and the second switch S_{H} remains off. Between the moment t₁ and the moment t₆, the third switch Q_{L} configured to charge the inductor L is denoted as a main power switch, and the fourth switch Q_{H} configured to discharge the inductor L is denoted as an auxiliary power switch.

After the moment t₁ and before a moment t₂, the voltage value of the input voltage Vᵢₙ received by the totem-pole power factor correction circuit 111 is less than V₀, the control circuit 1112 does not send the third control signal G_{QL} to the third switch Q_{L}, and does not send the fourth control signal G_{QH} to the fourth switch Q_{H}, and the third switch Q_{L} and the fourth switch Q_{H} are turned off.

After the moment t₂ and before a moment t₃, the voltage value of the input voltage Vᵢₙ received by the totem-pole power factor correction circuit 111 is greater than V₀ and less than a predetermined voltage value V_{Y}, and the control circuit 1112 controls the third switch Q_{L} to be alternately turned on and off, and controls the fourth switch Q_{H} to be turned off.

In an embodiment, between the moment t₂ and the moment t₃, in response to a case in which an absolute value of the voltage value of the input voltage Vᵢₙ is greater than V₀ and less than the predetermined voltage value V_{Y}, and a phase value of the input voltage Vᵢₙ is within a predetermined phase range, the control circuit 1112 periodically sends the third control signal G_{QL} to the third switch Q_{L}, for first preset duration T₁ each time, so that the third switch Q_{L} is periodically turned on based on the third control signal G_{QL}. In addition, the control circuit 1112 does not send the fourth control signal G_{QH} to the fourth switch Q_{H}, so that the fourth switch Q_{H} is turned off.

In an embodiment, the predetermined phase range includes a phase ranging from 0 degrees to 180 degrees and a phase ranging from 270 degrees to 360 degrees.

In an embodiment, the predetermined voltage value V_{Y} may be set to k times a peak voltage of the output voltage V₁ provided by the totem-pole power factor correction circuit 111. k is a constant greater than 0 and less than 1. For example, when a peak voltage of the input voltage Vᵢₙ is greater than a preset voltage, the predetermined voltage value V_{Y} may be set to 3/8*V₁. When a peak voltage of the input voltage Vᵢₙ is less than a preset voltage, the predetermined voltage value V_{Y} may be set to 3/16*V₁.

In an embodiment, between the moment t₂ and the moment t₃, when the third switch Q_{L} is turned on, and the fourth switch Q_{H} is turned off, the input voltage Vᵢₙ charges the inductor L through the third switch Q_{L} and the first switch S_{L}, and a current i_{L} flowing through the inductor L gradually increases. When the third switch Q_{L} is turned off, and the fourth switch Q_{H} is turned off, for example, the fourth switch Q_{H} is a MOS transistor, the inductor L is discharged through a body diode D_{QH} of the fourth switch Q_{H}, an output end a and an output end b of the totem-pole power factor correction circuit 111, and the first switch S_{L}, to provide the output voltage V₁ for the direct current conversion circuit 112.

After the moment t₃ and before a moment t₄, the voltage value of the input voltage Vᵢₙ received by the totem-pole power factor correction circuit 111 is greater than the predetermined voltage value V_{Y}, and the control circuit 1112 controls the third switch Q_{L} and the fourth switch Q_{H} to be alternately turned on.

In an embodiment, between the moment t₃ and the moment t₄, in response to a case in which the absolute value of the voltage value of the input voltage Vᵢₙ is greater than or equal to the predetermined voltage value V_{Y}, and the phase value of the input voltage Vᵢₙ is within the predetermined phase range, the control circuit 1112 periodically sends the third control signal G_{QL} to the third switch Q_{L}, and sends the fourth control signal G_{QH} to the fourth switch Q_{H}, so that the third switch Q_{L} and the fourth switch Q_{H} are alternately turned on. Duration in which the control circuit 1112 sends the third control signal G_{QL} each time to the third switch Q_{L}, the main power switch, is the first preset duration T₁, and duration of each on-session of the third switch Q_{L} is the first preset duration T₁. Duration in which the control circuit 1112 sends the fourth control signal G_{QH} each time to the fourth switch Q_{H}, the auxiliary power switch, is second preset duration T₂, and duration of each on-session of the fourth switch Q_{H} is the second preset duration T₂.

In an embodiment, between the moment t₃ and the moment t₄, when the third switch Q_{L} is turned on, and the fourth switch Q_{H} is turned off, the input voltage Vᵢₙ charges the inductor L through the third switch Q_{L} and the first switch S_{L}, and a current i_{L} flowing through the inductor L gradually increases. When the third switch Q_{L} is turned off, and the fourth switch Q_{H} is turned off, for example, the fourth switch Q_{H} is a MOS transistor, the inductor L is discharged through a body diode D_{QH} of the fourth switch Q_{H}, the output end a and the output end b of the totem-pole power factor correction circuit 111, and the first switch S_{L}, to provide the output voltage V₁ for the direct current conversion circuit 112. When the third switch Q_{L} is turned off, and the fourth switch Q_{H} is turned on, the inductor L is discharged through a source and a drain of the fourth switch Q_{H}, the output end a and the output end b of the totem-pole power factor correction circuit 111, and the first switch S_{L}, to provide the output voltage V₁ for the direct current conversion circuit 112.

After the moment t₄ and before a moment t₅, in response to a case in which the absolute value of the voltage value of the input voltage Vᵢₙ is greater than V₀ and less than the predetermined voltage value V_{Y}, and the phase value of the input voltage Vᵢₙ is within the predetermined phase range, the control circuit 1112 periodically sends the third control signal G_{QL} to the third switch Q_{L}, for the first preset duration T₁ each time, so that the third switch Q_{L} is periodically turned on based on the third control signal G_{QL}. In addition, the control circuit 1112 does not send the fourth control signal G_{QH} to the fourth switch Q_{H}, so that the fourth switch Q_{H} is turned off.

After the moment t₅, the voltage value of the input voltage Vᵢₙ received by the totem-pole power factor correction circuit 111 is less than V₀, the control circuit 1112 does not send the third control signal G_{QL} to the third switch Q_{L}, and does not send the fourth control signal G_{QH} to the fourth switch Q_{H}, and the third switch Q_{L} and the fourth switch Q_{H} are turned off.

At a moment t₆, the voltage value of the input voltage Vᵢₙ received by the totem-pole power factor correction circuit 111 decreases from 0. The control circuit 1112 sends the second control signal G_{SH} to the second switch S_{H}, so that the second switch S_{L} is turned on based on the second control signal G_{SH}. In addition, the first switch S_{L} is turned off. After the moment t₆ and before a moment t₁₁, the voltage value of the input voltage Vᵢₙ remains negative, and the control circuit 1112 continuously sends the second control signal G_{SH} to the second switch S_{H}, so that the second switch S_{H} remains on, and the first switch S_{L} remains off. Between the moment t₆ and the moment t₁₁, the fourth switch Q_{H} configured to charge the inductor L is denoted as the main power switch, and the third switch Q_{L} configured to discharge the inductor L is denoted as the auxiliary power switch.

After the moment t₆ and before a moment t₇, the voltage value of the input voltage Vᵢₙ received by the totem-pole power factor correction circuit 111 is less than V₀, the control circuit 1112 does not send the third control signal G_{QL} to the third switch Q_{L}, and does not send the fourth control signal G_{QH} to the fourth switch Q_{H}, and the third switch Q_{L} and the fourth switch Q_{H} are turned off.

After the moment t₇ and before a moment t₈, the absolute value of the voltage value of the input voltage Vᵢₙ is greater than V₀ and less than the predetermined voltage value V_{Y}, but the phase value of the input voltage Vᵢₙ is not within the predetermined phase range. The control circuit 1112 controls the third switch Q_{L} to be alternately turned on and off, and controls the fourth switch Q_{H} to be turned off.

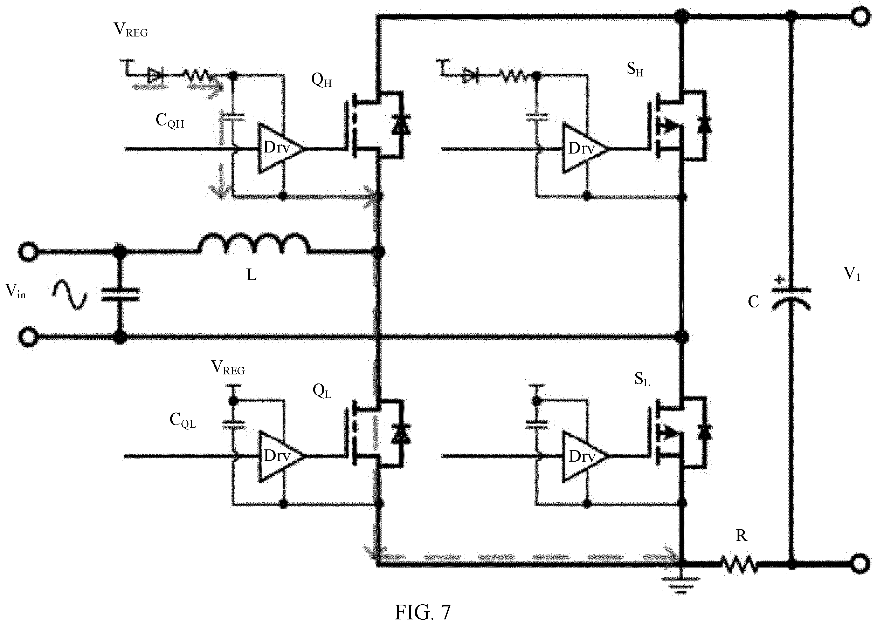

Between the moment t₇ and the moment t₈, although the absolute value of the voltage value of the input voltage Vᵢₙ is less than the predetermined voltage value V_{Y}, when the phase value of the input voltage Vᵢₙ is between 180 degrees and 270 degrees, the fourth switch Q_{H} is the main power switch, and the third switch Q_{L} is the auxiliary power switch. FIG. 7 is a schematic diagram of another circuit structure of the totem-pole power factor correction circuit according to this application. FIG. 7 shows a bootstrap capacitor of each power switch and a connection relationship. To charge a bootstrap capacitor C_{QH} of the fourth switch Q_{H}, the third switch QL needs to be turned on, so that a charging voltage V_{REG} can be grounded through the bootstrap capacitor C_{QH} and a drain and a source of the third switch Q_{L}. Between the moment t₇ and the moment t₈, if the control circuit 1112 controls only the fourth switch Q_{H} to be turned on and controls the third switch Q_{L} to be turned off, the fourth switch Q_{H} cannot perform bootstrap charging, and as a result, the entire totem-pole power factor correction circuit 111 cannot normally provide the output voltage V₁. Therefore, between the moment t₇ and the moment t₈, the control circuit 1112 controls the third switch Q_{L} and the fourth switch Q_{H} to be alternately turned on.

After the moment t₈ and before a moment t₉, in response to a case in which the absolute value of the voltage value of the input voltage Vᵢₙ is greater than the predetermined voltage value V_{Y}, and the phase value of the input voltage Vᵢₙ is not within the predetermined phase range, the control circuit 1112 periodically sends the third control signal G_{QL} to the third switch Q_{L}, and sends the fourth control signal G_{QH} to the fourth switch Q_{H}, so that the third switch Q_{L} and the fourth switch Q_{H} are alternately turned on.

In an embodiment, between the moment t₇ and the moment t₉, in response to a case in which the absolute value of the voltage value of the input voltage Vᵢₙ is greater than V₀ and less than the predetermined voltage value V_{Y}, and the phase value of the input voltage Vᵢₙ is not within the predetermined phase range, the control circuit 1112 periodically sends the third control signal G_{QL} to the third switch Q_{L}, and sends the fourth control signal G_{QH} to the fourth switch Q_{H}, so that the third switch Q_{L} and the fourth switch Q_{H} are alternately turned on. Duration in which the control circuit 1112 sends the fourth control signal G_{QH} each time to the fourth switch Q_{H}, the main power switch, is the first preset duration T₁, and duration of each on-session of the fourth switch Q_{H} is the first preset duration T₁. Duration in which the control circuit 1112 sends the third control signal G_{QL} each time to the third switch Q_{L}, the auxiliary power switch, is the second preset duration T₂, and duration of each on-session of the third switch Q_{L} is the second preset duration T₂.

Between the moment t₇ and the moment t₉, when the fourth switch Q_{H} is turned on, and the third switch Q_{L} is turned off, the input voltage Vᵢₙ charges the inductor L through the fourth switch Q_{H} and the second switch S_{H} and the current i_{L} flowing through the inductor L gradually increases. When the third switch Q_{L} is turned off, and the fourth switch Q_{H} is turned off, for example, the third switch Q_{L} is a MOS transistor, the inductor L is discharged through a body diode D_{QL} of the third switch Q_{L}, the output end b and the output end a of the totem-pole power factor correction circuit 111, and the second switch S_{H}, to provide the output voltage V₁ for the direct current conversion circuit 112. When the fourth switch Q_{H} is turned off, and the third switch Q_{L} is turned on, the inductor L is discharged through the source and the drain of the third switch Q_{L}, the output end b and the output end a of the totem-pole power factor correction circuit 111, and the second switch S_{H}, to provide the output voltage V₁ for the direct current conversion circuit 112.

After the moment t₉ and before a moment t₁₀, the voltage value of the input voltage Vᵢₙ received by the totem-pole power factor correction circuit 111 is greater than Vₐ and less than the predetermined voltage value V_{Y}, and the control circuit 1112 controls the fourth switch Q_{H} to be alternately turned on and off, and controls the third switch Q_{L} to be turned off.

In an embodiment, between the moment t₉ and the moment t₁₀, in response to a case in which the absolute value of the voltage value of the input voltage Vᵢₙ is greater than V₀ and less than the predetermined voltage value V_{Y}, and the phase value of the input voltage Vᵢₙ is within the predetermined phase range, the control circuit 1112 periodically sends the fourth control signal G_{QH} to the fourth switch Q_{H}, for the first preset duration T₁ each time, so that the fourth switch Q_{H} is periodically turned on based on the fourth control signal G_{QH}. In addition, the control circuit 1112 does not send the third control signal G_{QL} to the third switch Q_{L}, so that the third switch Q_{L} is turned off.

In an embodiment, between the moment t₉ and the moment t₁₀, when the fourth switch Q_{H} is turned on, and the third switch Q_{L} is turned off, the input voltage Vᵢₙ charges the inductor L through the fourth switch Q_{H} and the second switch S_{H}, and the current i_{L} flowing through the inductor L gradually increases. When the third switch Q_{L} is turned off, and the fourth switch Q_{H} is turned off, for example, the third switch Q_{L} is a MOS transistor, the inductor L is discharged through a body diode D_{QL} of the third switch Q_{L}, the output end b and the output end a of the totem-pole power factor correction circuit 111, and the second switch S_{H}, to provide the output voltage V₁ for the direct current conversion circuit 112.

In conclusion, in response to a case in which a phase value of a transient voltage of the input voltage Vᵢₙ of the current totem-pole power factor correction circuit 111 is within the predetermined phase range, and the absolute value of the voltage value is less than the predetermined voltage value, the control circuit 1112 of the totem-pole power factor correction circuit 111 can control the main power switch in the half-bridge circuit 1111b to be turned on and off, and control the auxiliary power switch to remain off. Refer to the control logic in FIG. 6 in this embodiment of this application. In this embodiment of this application, when a voltage value of the transient voltage of the input voltage Vᵢₙ is small between the moment t₂ and the moment t₃, the moment t₄ and the moment t₅, and the moment t₉ and the moment t₁₀, the control circuit 1112 controls the auxiliary power switch to remain off.

Therefore, when the voltage value of the input voltage Vᵢₙ is small, energy provided by the input voltage Vᵢₙ for the inductor L is low, and the control circuit 1112 can control the auxiliary power switch to remain off. This avoids "hard turn-on" of the auxiliary power switch in a case of different voltages at both sides of the auxiliary power switch when the inductor L cannot resonate a voltage value at one side of the auxiliary power switch to a large voltage value. Therefore, according to this embodiment, a switching loss of the auxiliary power switch in the totem-pole power factor correction circuit 111 can be reduced, and operating efficiency of the totem-pole power factor correction circuit 111 and the power module 11 including the totem-pole power factor correction circuit 111 can be improved. In addition, a structure of an existing totem-pole power factor correction circuit 111 is not improved, and technical effects of a simple circuit structure and low costs are further achieved.

In addition, it should be noted that between the moment t₂ and the moment t₃, the moment t₄ and the moment t₅, and the moment t₉ and the moment t₁₀, the control circuit 1112 controls the auxiliary power switch to remain off, but the inductor L can still be discharged through the body diode of the auxiliary power switch, to provide the output voltage V₁ for the direct current conversion circuit 112. Therefore, in this embodiment of this application, control performed by the control circuit 1112 on the half-bridge circuit 1111b has little impact on the output voltage V₁ of the totem-pole power factor correction circuit 111. This ensures normal operation of the totem-pole power factor correction circuit 111 and the power module 11 including the totem-pole power factor correction circuit 111.

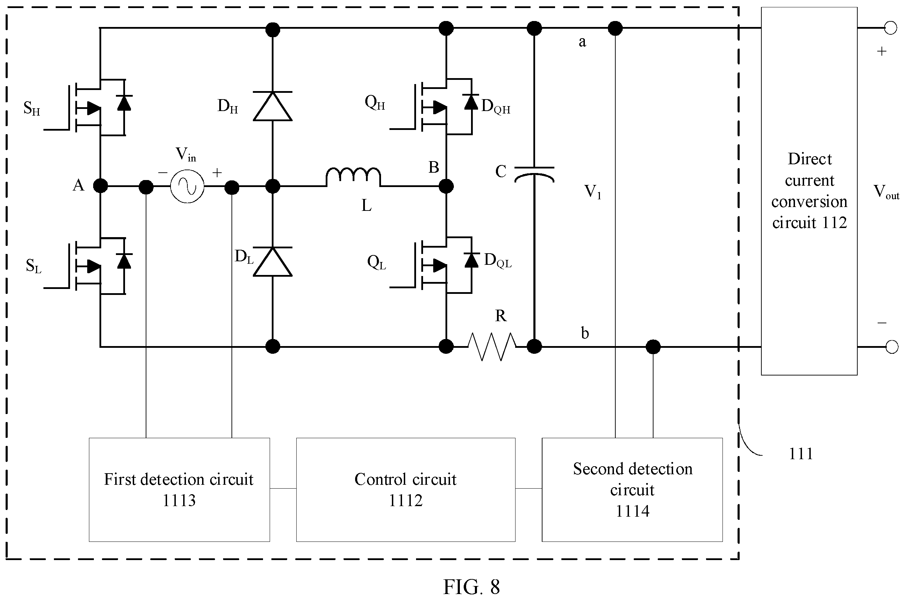

FIG. 8 is a schematic diagram of a structure of a power module according to this application. Based on the power module shown FIG. 4, the power module shown in FIG. 8 further includes a first detection circuit 1113 and a second detection circuit 1114. The control circuit 1112 may be configured to detect a voltage value, a phase value, and the like of the input voltage Vᵢₙ of the totem-pole power factor correction circuit 111 through the first detection circuit 1113, so that the control circuit 1112 controls the half-bridge circuit 1111b based on the voltage value and the phase value of the input voltage Vᵢₙ. The control circuit 1112 may be configured to detect a voltage value and the like of the output voltage V₁ of the totem-pole power factor correction circuit 111 through the second detection circuit 1114, so that the control circuit 1112 determines a predetermined voltage value and the like based on the voltage value of the output voltage V₁. Specific circuit structures of the first detection circuit 1113 and the second detection circuit 1114 are not limited in this application. For example, the first detection circuit may include a plurality of voltage divider resistors connected in series. In this case, the control circuit 1112 may determine the voltage value and the like of the input voltage Vᵢₙ by detecting a voltage value on the voltage divider resistor.

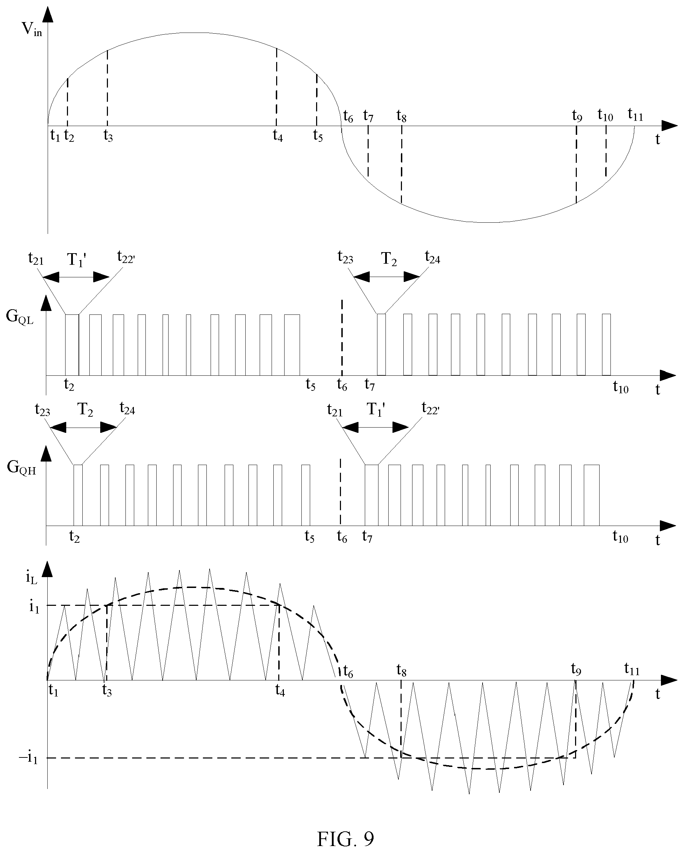

FIG. 9 is a schematic diagram of a control logic of a control circuit of a totem-pole power factor correction circuit according to a comparative example not according to the present claimed invention. The control logic shown in FIG. 9 may be applied to the power module 11 shown in FIG. 4, and is used by the control circuit 1112 of the totem-pole power factor correction circuit 111 to control the half-bridge circuit 1111b. The following describes, with reference to the totem-pole power factor correction circuit 111 provided in FIG. 4, the control logic in FIG. 9 provided in an embodiment of this application.

As shown in FIG. 9, the control circuit 1112 outputs a control signal to a main power switch and an auxiliary power switch in the totem-pole power factor correction circuit 111 based on a voltage value of the input voltage Vᵢₙ, to control the main power switch and the auxiliary power switch to be alternately turned on and off. A moment at which the control circuit 1112 specifically sends the control signal to the main power switch and the auxiliary power switch in the totem-pole power factor correction circuit 111 is the same as that shown in FIG. 5, and details are not described again.

Particularly, in the embodiment shown in FIG. 9, each time before sending the control signal to the main power switch, the control circuit 1112 adjusts, based on the voltage value of the current input voltage Vᵢₙ, duration of sending the control signal to the main power switch, so that the duration of the control signal is negatively correlated with an absolute value of the voltage value of the input voltage Vᵢₙ, and duration of each on-session of the main power switch is negatively correlated with the voltage value of the input voltage Vᵢₙ.

In an embodiment, the control circuit 1112 may obtain multiply first preset duration T₁ of each on-session of the main power switch by a multiple n to obtain adjusted duration of the control signal. n is a constant that is negatively correlated to the absolute value of the voltage value of the input voltage Vᵢₙ. For example, as shown in FIG. 9, between a moment t₁ and a moment t₆, the third switch Q_{L} is the main power switch. In this case, before sending the third control signal G_{QL} to the third switch Q_{L} at a moment t₂₁ between a moment t₂ and a moment t₅, the control circuit 1112 multiplies the first preset duration T₁ by the multiple n, to obtain adjusted duration T₁'. Subsequently, the control circuit 1112 sends the third control signal G_{QL} to the third switch Q_{L} for T₁' so that on-duration of the third switch Q_{L} is T₁'. Between the moment t₂ and the moment t₅, the control circuit 1112 does not adjust duration in which the control circuit 1112 sends the fourth control signal G_{QH} to the fourth switch Q_{H}, and keeps the duration to be second preset duration T₂. Correspondingly, between the moment t₆ and the moment t₁₁, the fourth switch Q_{H} is the main power switch. In this case, the control circuit 1112 sends the fourth control signal G_{QH} to the fourth switch Q_{H} for T₁', and sends the third control signal G_{QL} to the third switch Q_{L} for the second preset duration T₂.

Because n is negatively correlated with the voltage value of the input voltage Vᵢₙ, in an entire cycle of the input voltage Vᵢₙ between the moment t₁ and the moment t₁₁, on-duration of the main power switch is negatively correlated with the voltage value of the input voltage Vᵢₙ. Therefore, when the input voltage Vᵢₙ is low, the on-duration of the main power switch is long. This increases duration for charging the inductor L by using the input voltage Vᵢₙ, thereby increasing energy after the inductor L is charged. When the input voltage Vᵢₙ is high, the on-duration of the main power switch is short, and overall energy balance can be maintained. Therefore, impact of a change of the on-duration of the main power switch on power of the output voltage V₁ of the totem-pole power factor correction circuit 111 is reduced.

Even if the voltage value of the input voltage Vᵢₙ is small, the energy provided by the input voltage Vᵢₙ for the inductor L may also be increased. In this way, between the moment t₂ and a moment t₃, a moment t₄ and the moment t5, and a moment t₉ and a moment t₁₀, a voltage value provided by the inductor L to one side of the auxiliary power switch is increased, which can avoid "hard turn-on" of the auxiliary power switch in a case of different voltages at both sides of the auxiliary power switch within these time periods. Therefore, according to this embodiment, a switching loss of the auxiliary power switch in the totem-pole power factor correction circuit 111 can be reduced, and operating efficiency of the totem-pole power factor correction circuit 111 and the power module 11 including the totem-pole power factor correction circuit 111 can be improved. In addition, a structure of an existing totem-pole power factor correction circuit 111 is not improved, and technical effects of a simple circuit structure and low costs are further achieved.

This application further provides an electronic device, including the control circuit 1112 provided in any embodiment of this application, or the power module 11 provided in any embodiment of this application.

In the foregoing embodiment, a method performed by the control circuit 1112 provided in this embodiment of this application is described. To implement the functions in the method provided in the foregoing embodiments of this application, the control circuit 1112 that is used as an execution body may include a hardware structure and/or a software module, and implement the functions in a form of the hardware structure, the software module, or a combination of the hardware structure and the software module. Whether a specific function in the foregoing functions is performed by using the hardware structure, the software module, or the combination of the hardware structure and the software module depends on a specific application and a design constraint of the technical solutions. It should be noted and understood that division of the modules of a foregoing apparatus is merely logic function division. In actual implementation, some or all modules may be integrated into one physical entity, or the modules may be physically separated. The modules may be all implemented in a form of software invoked by a processing element, or may be all implemented in a form of hardware. Alternatively, some modules may be implemented in a form of software invoked by a processing element, and some modules are implemented in a form of hardware. The module may be a processing element separately disposed, or may be integrated in a chip of the foregoing apparatus for implementation. In addition, the module may alternatively be stored in a memory of the foregoing apparatus in a form of program code, and is invoked by a processing element of the foregoing apparatus to perform a function of a foregoing determining module. The other modules are implemented in a similar manner. In addition, all or some of the modules may be integrated together, or may be implemented independently. The processing element herein may be an integrated circuit, and has a signal processing capability. In an implementation process, steps in the method or the modules may be implemented by using a hardware integrated logical circuit in the processing element, or by using instructions in a form of software. For example, the foregoing modules may be one or more integrated circuits configured to implement the foregoing method, for example, one or more application-specific integrated circuits (application-specific integrated circuits, ASICs), one or more digital signal processors (digital signal processors, DSPs), or one or more field programmable gate arrays (field programmable gate arrays, FPGAs). For another example, when one of the foregoing modules is implemented in a form of invoking program code by a processing element, the processing element may be a general-purpose processor, for example, a central processing unit (central processing unit, CPU) or another processor capable of invoking the program code. For another example, the modules may be integrated together and implemented in a form of a system-on-a-chip (system-on-a-chip, SOC).

In the foregoing embodiment, all or some steps performed by the control circuit 1112 may be implemented by using software, hardware, firmware, or any combination thereof. When software is used to implement embodiments, all or some embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

This application further provides a computer-readable storage medium. The computer-readable storage medium stores computer instructions. The computer instructions, when executed, may be used to perform any method performed by the control circuit 1112 in the foregoing embodiments of this application.

An embodiment of this application further provides a chip for running instructions. The chip is configured to perform any method performed by the control circuit 1112 in this application.

An embodiment of this application further provides a computer program product. The program product includes a computer program. The computer program is stored in a storage medium. At least one processor may read the computer program from the storage medium. When executing the computer program, the at least one processor may implement any method performed by the control circuit 1112 in this application.

A person of ordinary skill in the art may understand that all or some of the steps in the foregoing embodiments may be implemented by a program instructing related hardware. The program may be stored in a computer-readable storage medium. When the program is executed, the steps of each method embodiment are performed. The foregoing storage medium includes any medium capable of storing program code, for example, a ROM, a magnetic disk, or an optical disc.

## Claims

1. A control circuit (1112) configured to control a totem-pole power factor correction circuit comprising a half-bridge circuit (1111a, 1111b) which comprises a first switch (QL) and a second switch (QH) driven by gate-driver circuits, and a bootstrap capacitor is coupled to a gate-driver circuit of a high-side one of the switches; the first switch (QL) is denoted as a main power switch and the second switch (QH) is denoted as an auxiliary power switch when a phase value of the input voltage is within a phase range comprising 0 degrees to 180 degrees, and the first switch (QL) is denoted as the auxiliary power and the second switch (QH) is denoted as the main power switch when the phase value of the input voltage is within a phase range comprising 180 degrees to 360 degrees; wherein the control circuit is configured to:
in response to a case in which an absolute value of a voltage value of the input voltage is less than a voltage value V0, not send a control signal to the main power switch and not send a control signal to the auxiliary power switch, such that the main power switch and the auxiliary power switch are turned off;
in response to a case in which a phase value of an input voltage (Vᵢₙ) of the totem-pole power factor correction circuit is within a predetermined phase range, and an absolute value of a voltage value of the input voltage is less than a predetermined voltage value (V_{Y}) and greater than said voltage value V0, control the main power switch to be alternately turned on and off, and control the auxiliary power switch to remain off, wherein the predetermined phase range comprises: 0 degrees to 180 degrees, and 270 degrees to 360 degrees;
in response to a case in which the absolute value of the voltage value of the input voltage is greater than or equal to the predetermined voltage value (V_{Y}), control the main power switch and the auxiliary power switch to be alternately turned on and off;
in response to a case in which the phase value of the input voltage is not within the predetermined phase range and the absolute value of a voltage value of the input voltage is greater than said voltage value V0, control the main power switch and the auxiliary power switch to be alternately turned on and off.

2. The control circuit according to claim 1, wherein the predetermined voltage value is k times a peak voltage of an output voltage of the totem-pole power factor correction circuit, and k is greater than 0 and less than 1.

3. A totem-pole power factor correction circuit (111), comprising a half-bridge circuit (1111a, 1111b) and the control circuit (1112) of claim 1, wherein the half-bridge circuit comprises a first switch (Q_{L}) and a second switch (QH).

4. A power module (11), configured to obtain an input voltage, and supply power to a load, wherein the power module comprises:
the totem-pole power factor correction circuit according to claim 3, configured to obtain the input voltage, and provide an output voltage; and
a direct current conversion circuit (112), configured to perform voltage conversion on the output voltage, and then supply power to the load.

## Patentansprüche

1. Steuerschaltung (1112), die dazu konfiguriert ist, eine Totem-Pole-Leistungsfaktorkorrekturschaltung zu steuern, umfassend eine Halbbrückenschaltung (1111a, 1111b), die einen ersten Schalter (QL) und einen zweiten Schalter (QH), die von Gate-Treiber-Schaltungen angetrieben werden, umfasst, und ein Bootstrap-Kondensator mit einer Gate-Treiber-Schaltung eines hochseitigen der Schalter gekoppelt ist; der erste Schalter (QL) als ein Hauptleistungsschalter bezeichnet wird und der zweite Schalter (QH) als ein Hilfsleistungsschalter bezeichnet wird, wenn ein Phasenwert der Eingangsspannung innerhalb eines Phasenbereichs, umfassend 0 Grad bis 180 Grad, ist, und der erste Schalter (QL) als der Hilfsleistungsschalter bezeichnet wird und der zweite Schalter (QH) als der Hauptleistungsschalter bezeichnet wird, wenn der Phasenwert der Eingangsspannung innerhalb eines Phasenbereichs, umfassend 180 Grad bis 360 Grad, ist; wobei die Steuerschaltung zu Folgendem konfiguriert ist:
als Reaktion auf einen Fall, in dem ein absoluter Wert eines Spannungswerts der Eingangsspannung kleiner als ein Spannungswert V0 ist, derartiges Nicht-Senden eines Steuersignals an den Hauptleistungsschalter und Nicht-Senden eines Steuersignals an den Hilfsleistungsschalter, dass der Hauptleistungsschalter und der Hilfsleistungsschalter ausgeschaltet werden;
als Reaktion auf einen Fall, in dem ein Phasenwert einer Eingangsspannung (Vᵢₙ) der Totem-Pole-Leistungsfaktorkorrekturschaltung innerhalb eines vorherbestimmten Phasenbereichs ist und ein absoluter Wert eines Spannungswerts der Eingangsspannung kleiner als ein vorbestimmter Spannungswert (V_{Y}) und größer als der Spannungswert V0 ist, Steuern des Hauptleistungsschalters, so dass er abwechselnd ein- und ausgeschaltet wird, und Steuern des Hilfsleistungsschalters, so dass er aus bleibt, wobei der vorherbestimmte Phasenbereich Folgendes umfasst: 0 Grad bis 180 Grad und 270 Grad bis 360 Grad;
als Reaktion auf einen Fall, in dem der absolute Wert des Spannungswerts der Eingangsspannung größer als oder gleich dem vorbestimmten Spannungswert (V_{Y}) ist, Steuern des Hauptleistungsschalters und des Hilfsleistungsschalters, so dass sie abwechselnd ein- und ausgeschaltet werden;
als Reaktion auf einen Fall, in dem der Phasenwert der Eingangsspannung nicht innerhalb des vorbestimmten Phasenbereichs ist und der absolute Wert einer Eingangsspannung größer als der Spannungswert V0 ist, Steuern des Hauptleistungsschalters und des Hilfsleistungsschalters, so dass sie abwechselnd ein- und ausgeschaltet werden.

2. Steuerschaltung nach Anspruch 1, wobei der vorbestimmte Spannungswert ein k-Faches einer Spitzenspannung einer Ausgangsspannung der Totem-Pole-Leistungsfaktorkorrekturschaltung ist und k größer als 0 und kleiner als 1 ist.

3. Totem-Pole-Leistungsfaktorkorrekturschaltung (111), umfassend eine Halbbrückenschaltung (1111a, 1111b) und die Steuerschaltung (1112) nach Anspruch 1, wobei die Halbbrückenschaltung einen ersten Schalter (Q_{L}) und einen zweiten Schalter (QH) umfasst.

4. Leistungsmodul (11), das dazu konfiguriert ist, eine Eingangsspannung zu erhalten und eine Last mit Leistung zu versorgen, wobei das Leistungsmodul Folgendes umfasst:
die Totem-Pole-Leistungsfaktorkorrekturschaltung nach Anspruch 3, die dazu konfiguriert ist, die Eingangsspannung zu erhalten und eine Ausgangsspannung bereitzustellen; und
eine Gleichstromumwandlungsschaltung (112), die dazu konfiguriert ist, eine Spannungsumwandlung an der Ausgangsspannung durchzuführen und dann die Last mit Leistung zu versorgen.

## Revendications

1. Circuit de commande (1112) configuré pour commander un circuit de correction de facteur de puissance en totem-pôle comprenant un circuit en demi-pont (1111a, 1111b) qui comprend un premier commutateur (QL) et un second commutateur (QH) attaqués par des circuits d'attaque de grille et un condensateur d'amorçage est couplé à un circuit d'attaque de grille d'un commutateur côté haut des commutateurs, le premier commutateur (QL) est désigné comme commutateur de puissance principal et le second commutateur (QH) est désigné comme un commutateur de puissance auxiliaire lorsqu'une valeur de phase de la tension d'entrée est au sein d'une plage de phase comprenant 0 degré à 180 degrés et le premier commutateur (QL) est désigné comme la puissance auxiliaire et le second commutateur (QH) est désigné comme le commutateur de puissance principal lorsque la valeur de phase de la tension d'entrée est au sein d'une plage de phase comprenant 180 degrés à 360 degrés, dans lequel le circuit de commande est configuré pour :
en réponse à un cas dans lequel une valeur absolue d'une valeur de tension de la tension d'entrée est inférieure à une valeur de tension V0, ne pas envoyer de signal de commande au commutateur de puissance principal et ne pas envoyer de signal de commande au commutateur de puissance auxiliaire, de telle sorte que le commutateur de puissance principal et le commutateur de puissance auxiliaire sont éteints ;
en réponse à un cas dans lequel une valeur de phase d'une tension d'entrée (Vᵢₙ) du circuit de correction de facteur de puissance en totem-pôle est au sein d'une plage de phase prédéterminée, et une valeur absolue d'une valeur de tension de la tension d'entrée est inférieure à une valeur de tension prédéterminée (V_{Y}) et supérieure à ladite valeur de tension V0, commander le commutateur de puissance principal pour qu'il soit alternativement allumé et éteint, et commander le commutateur de puissance auxiliaire pour qu'il reste éteint, dans lequel la plage de phase prédéterminée comprend : 0 degré à 180 degrés et 270 degrés à 360 degrés ;
en réponse à un cas dans lequel la valeur absolue de la valeur de tension de la tension d'entrée est supérieure ou égale à la valeur de tension prédéterminée (V_{Y}), commander le commutateur de puissance principal et le commutateur de puissance auxiliaire pour qu'ils soient alternativement allumés et éteints ;
en réponse à un cas dans lequel la valeur de phase de la tension d'entrée n'est pas au sein de la plage de phase prédéterminée et la valeur absolue d'une valeur de tension de la tension d'entrée est supérieure à ladite valeur de tension V0, commander le commutateur de puissance principal et le commutateur de puissance auxiliaire pour qu'ils soient alternativement allumés et éteints.

2. Circuit de commande selon la revendication 1, dans lequel la valeur de tension prédéterminée est k fois une tension de crête d'une tension de sortie du circuit de correction de facteur de puissance en totem-pôle, et k est supérieur à 0 et inférieur à 1.

3. Circuit de correction de facteur de puissance en totem-pôle (111), comprenant un circuit en demi-pont (1111a, 1111b) et le circuit de commande (1112) selon la revendication 1, dans lequel le circuit en demi-pont comprend un premier commutateur (Q_{L}) et un second commutateur (QH).

4. Module de puissance (11), configuré pour obtenir une tension d'entrée et alimenter une charge en puissance, dans lequel le module de puissance comprend :
le circuit de correction de facteur de puissance en totem-pôle selon la revendication 3, configuré pour obtenir la tension d'entrée et fournir une tension de sortie ; et
un circuit de conversion de courant continu (112), configuré pour réaliser une conversion de tension sur la tension de sortie, puis alimenter la charge en puissance.
